# EUROPEAN PATENT APPLICATION

(11) **EP 4 851 045 A1**
(43) Date of publication of application: **09.12.2026**
(21) Application number: 26183707.4
(22) Date of filing: 08.06.2026
(51) Int. Cl.: B64D 27/12, B64D 33/02, F02C 3/14, F02C 7/04, B64D 27/00

(54) **AIRCRAFT PROPULSION SYSTEM WITH WING COVERED ENGINE CORE**

(30) Priority: 06.06.2025 US 202519230938
(71) Applicant: RTX Corporation, Farmington, CT 06032 (US)
(72) Inventor: MORTON, Jeffrey T., Manchester, 06040 (US); SOBANSKI, Jon E., Glastonbury, 06033 (US); BREAULT, Andrew E., Bolton, 06043 (US)
(74) Representative: Dehns

(57) **Abstract**

An assembly is provided for an aircraft (20). This assembly includes an aircraft propulsion system (24A, 24B) and an aircraft wing (36A, 36B). The aircraft propulsion system includes a propulsion section (62), an engine core (84) and an engine flowpath (86). The propulsion section includes a propulsor rotor rotatable about a propulsor axis. The engine core is configured to power operation of the propulsion section and is disposed aft of the propulsor rotor. The engine core includes a core compressor section, a core combustor section and a core turbine section. The engine flowpath extends through the core compressor section, the core combustor section and the core turbine section from an airflow inlet into the engine flowpath to a combustion products exhaust from the engine flowpath. The aircraft wing is disposed aft of the propulsor rotor. The aircraft wing is disposed vertically above the propulsor axis. The aircraft wing chordwise and spanwise overlaps the engine core.

## Description

### BACKGROUND OF THE DISCLOSURE

### 1. Technical Field

This disclosure relates generally to an aircraft and, more particularly, to propulsion system(s) for the aircraft.

### 2. Background Information

Various types and configurations of aircraft propulsion systems are known in the art, including those with one or more open propulsor rotors. While these known aircraft propulsion systems have various benefits, there is still room in the art for improvement.

### SUMMARY OF THE DISCLOSURE

According to an aspect of the present disclosure, an assembly is provided for an aircraft. This assembly includes an aircraft propulsion system and an aircraft wing. The aircraft propulsion system includes a propulsion section, an engine core and an engine flowpath. The propulsion section includes a propulsor rotor rotatable about a propulsor axis. The engine core is configured to power operation of the propulsion section and is disposed aft of the propulsor rotor. The engine core includes a core compressor section, a core combustor section and a core turbine section. The engine flowpath extends through the core compressor section, the core combustor section and the core turbine section from an airflow inlet into the engine flowpath to a combustion products exhaust from the engine flowpath. The aircraft wing is disposed aft of the propulsor rotor. The aircraft wing is disposed vertically above the propulsor axis. The aircraft wing chordwise and spanwise overlaps the engine core.

According to another aspect of the present disclosure, another assembly is provided for an aircraft. This assembly includes an aircraft propulsion system and an aircraft wing. The aircraft propulsion system includes a propulsion section, an engine core and an engine flowpath. The propulsion section includes an open propulsor rotor. The engine core is configured to power operation of the propulsion section and is disposed aft of the open propulsor rotor. The engine core includes a core compressor section, a core combustor section and a core turbine section. The engine flowpath extends through the core compressor section, the core combustor section and the core turbine section from an airflow inlet into the engine flowpath to a combustion products exhaust from the engine flowpath. The aircraft wing is disposed aft of the open propulsor rotor. The aircraft wing chordwise and spanwise overlaps the core compressor section.

According to still another aspect of the present disclosure, another assembly is provided for an aircraft. This assembly includes an aircraft propulsion system and an aircraft wing. The aircraft propulsion system includes a propulsion section, an engine core, a rotating structure and an engine flowpath. The propulsion section includes a propulsor rotor rotatable about a propulsor axis. The engine core is configured to power operation of the propulsion section and is disposed aft of the propulsor rotor. The engine core includes a core compressor section, a core combustor section and a core turbine section. The rotating structure includes a core compressor rotor in the core compressor section and a core turbine rotor in the core turbine section. The rotating structure is rotatable about an engine axis that is parallel to the propulsor axis in a vertical reference plane. The engine flowpath extends through the core compressor section, the core combustor section and the core turbine section from an airflow inlet into the engine flowpath to a combustion products exhaust from the engine flowpath. The aircraft wing is disposed aft of the propulsor rotor. The aircraft wing chordwise and spanwise overlaps the core compressor section.

The following optional features may be applied to any of the above aspects.

The aircraft wing may be arranged vertically closer to a vertical top of the propulsion section than a vertical bottom of the propulsion section.

The open propulsor rotor may be rotatable about a propulsor axis. The aircraft wing may be located vertically above the propulsor axis.

The propulsion section may also include an open guide vane structure next to and downstream of the open propulsor rotor.

The engine core may be underwing mounted to the aircraft wing.

The aircraft wing may be disposed vertically above the engine core.

The aircraft wing may chordwise and/or spanwise overlap the core compressor section.

The core turbine section may be arranged between the propulsor rotor and the core combustor section.

The aircraft propulsion system may also include a rotating structure. The rotating structure may include a core compressor rotor in the core compressor section and a core turbine rotor in the core turbine section. The rotating structure may be coaxial with the propulsor rotor.

The aircraft propulsion system may also include a rotating structure rotatable about an engine axis. The rotating structure may include a core compressor rotor in the core compressor section and a core turbine rotor in the core turbine section. The engine axis may be offset from the propulsor axis.

The engine axis may be vertically offset from the propulsor axis.

The engine axis may be angularly offset from the propulsor axis.

The aircraft propulsion system may also include a power turbine section arranged along the engine flowpath between the engine core and the combustion products exhaust. The power turbine section may include a power turbine rotor operatively coupled to the propulsor rotor.

The aircraft propulsion system may also include a rotating structure rotatable about an engine axis. The rotating structure may include a core compressor rotor in the core compressor section and a core turbine rotor in the core turbine section. The rotating structure may be operatively coupled to the propulsor rotor.

The airflow inlet may be disposed vertically at or above a vertical top of the propulsion section.

The airflow inlet may be disposed vertically above the propulsor axis.

The airflow inlet may be configured with the aircraft wing.

The propulsor rotor may be configured as or otherwise include an open propulsor rotor.

The aircraft propulsion system may also include an open guide vane structure configured to condition air propelled by the open propulsor rotor.

The open guide vane structure may be downstream of the open propulsor rotor.

The propulsor rotor may include at least nine propulsor blades arranged circumferentially about the propulsor axis in an array.

The propulsor rotor may be configured as or otherwise include a ducted propulsor rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a perspective illustration of an aircraft with multiple propulsion systems mounted to wings of the aircraft.
FIG. 2 is a schematic illustration of an exemplary one of the propulsion systems.
FIG. 3 is a partial schematic illustration of the propulsion system at a propulsion section.
FIG. 4 is a schematic illustration of the propulsion system underwing mounted to an exemplary one of the aircraft wings.
FIGS. 5A and 5B are partial schematic illustrations of the wing with various air scoop arrangements.
FIG. 6 is a partial schematic illustration of the wing with a perforated skin.
FIG. 7 is a partial plan view schematic illustration along the wing at the propulsion system.
FIGS. 8 and 9 are partial schematic illustrations of the propulsion system with various offset core arrangements.
FIGS. 10 and 11 are partial plan view schematic illustrations along the wing at the propulsion system with various core arrangements.
FIGS. 12 and 13 are partial schematic illustrations of the propulsion system with various alternative core arrangements.
FIG. 14 is a partial schematic illustration of the propulsion system configured with a ducted propulsor rotor.

### DETAILED DESCRIPTION

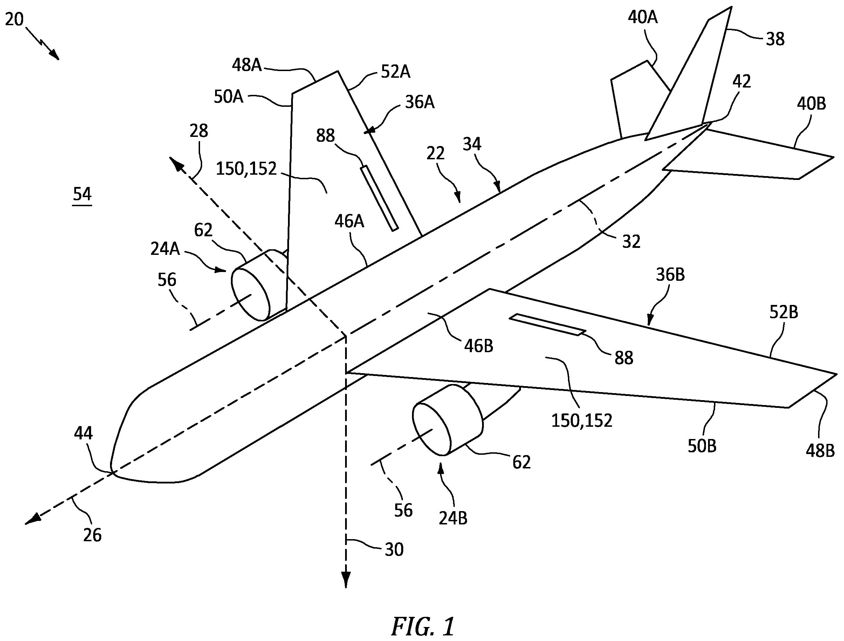

FIG. 1 is a perspective schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems.

The aircraft 20 and its aircraft airframe 22 have a roll axis 26, a pitch axis 28 and a yaw axis 30. The roll axis 26 and the pitch axis 28 of FIG. 1 lay in and define a horizontal reference plane for the aircraft 20 and its aircraft airframe 22. This horizontal reference plane may be completely or substantially (e.g., within 5-10°) parallel with a horizon line and/or completely or substantially (e.g., within 5-10°) perpendicular to a force of gravity when, for example, the aircraft 20 is flying in (or close to) level flight and/or the aircraft 20 is on ground. The roll axis 26 and the yaw axis 30 of FIG. 1 lay in and define a vertical reference plane for the aircraft 20 and its aircraft airframe 22. This vertical reference plane is perpendicular to the horizontal reference plane and may be completely or substantially (e.g., within 5-10°) parallel to the force of gravity when, for example, the aircraft 20 is flying in (or close to) level flight and/or the aircraft 20 is on the ground. The roll axis 26 of FIG. 1 is a longitudinally extending axis that may be parallel (e.g., coaxial) with, or slightly angularly offset (e.g., by less than 5° or 10°) vertically up or down from, a longitudinal centerline 32 of the aircraft 20 and its aircraft airframe 22. The pitch axis 28 of FIG. 1 is a laterally extending axis that is perpendicular to the roll axis 26. The yaw axis 30 of FIG. 1 is a vertically extending axis that is perpendicular to the roll axis 26 and the pitch axis 28 and, thus, perpendicular to the horizontal reference plane.

The aircraft airframe 22 of FIG. 1 includes an aircraft fuselage 34 and one or more aircraft wings 36A and 36B (generally referred to as "36"). This aircraft airframe 22 may also include one or more aircraft stabilizers, such as at least one vertical stabilizer 38 and one or more horizontal stabilizers 40A and 40B arranged at (e.g., on, adjacent or proximate) an aft, downstream tail end 42 of the aircraft fuselage 34. However, in other embodiments, it is contemplated one or more of the aircraft stabilizers 38, 40A and/or 40B may be omitted where, for example, the aircraft 20 is alternatively configured as a blended wing aircraft.

The aircraft fuselage 34 extends longitudinally along the aircraft centerline 32 from a forward, upstream nose end 44 of the aircraft airframe 22 and its aircraft fuselage 34 to the fuselage tail end 42. The aircraft fuselage 34 extends laterally between and to opposing lateral sides 46A and 46B (generally referred to as "46") of the aircraft fuselage 34.

The aircraft wings 36A and 36B are arranged to the opposing lateral sides 46A and 46B of the aircraft fuselage 34. The first aircraft wing 36A of FIG. 1, for example, is connected to the aircraft fuselage 34 at the fuselage first side 46A. The second aircraft wing 36B is connected to the aircraft fuselage 34 at the fuselage second side 46B. The aircraft fuselage 34 of FIG. 1 is thereby located laterally between the first aircraft wing 36A and the second aircraft wing 36B. Each of these aircraft wings 36A and 36B projects spanwise (e.g., laterally relative to the aircraft centerline 32) out from the aircraft fuselage 34 to a tip 48A, 48B of the respective aircraft wing 36A, 36B. Each of the aircraft wings 36A and 36B extends chordwise (e.g., longitudinally along the aircraft centerline 32) between and to a leading edge 50A, 50B of the respective aircraft wing 36A, 36B and a trailing edge 52A, 52B of the respective aircraft wing 36A, 36B.

The aircraft propulsion systems 24A and 24B of FIG. 1 are mounted to the aircraft airframe 22 and arranged to the opposing lateral sides 46A and 46B of the aircraft fuselage 34. The first aircraft propulsion system 24A of FIG. 1, for example, is mounted to the first aircraft wing 36A. The second aircraft propulsion system 24B is mounted to the second aircraft wing 36B. The aircraft fuselage 34 of FIG. 1 is thereby located laterally between the first aircraft propulsion system 24A and the second aircraft propulsion system 24B. The present disclosure, however, is not limited to such an exemplary arrangement. For example, it is contemplated the first aircraft propulsion system 24A may alternatively be mounted to the aircraft fuselage 34 at the fuselage first side 46A, and the second aircraft propulsion system 24B may alternatively be mounted to the aircraft fuselage 34 at the fuselage second side 46B. In such an example, a wing and/or pylon structure to which each aircraft propulsion system 24 is mounted may comprise a horizontal surface extending from the fuselage 34 forward of an empennage (e.g., a tail section) and aft of the aircraft wings 36. The wing and/or pylon for the fuselage 34 mounted system may be an airframe component of the aircraft airframe 22 as described herein.

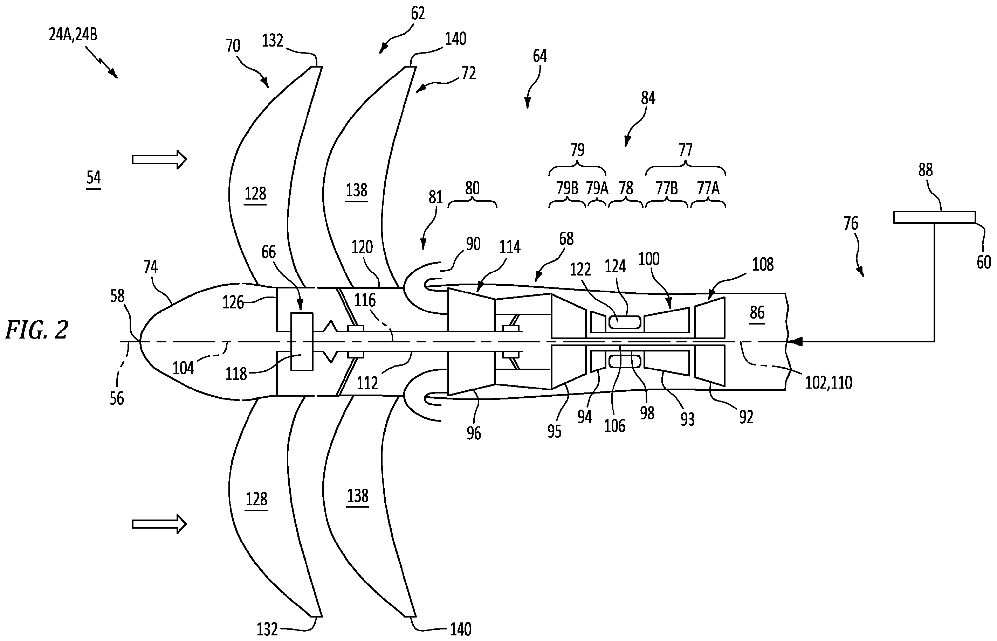

FIG. 2 illustrates an exemplary one of the aircraft propulsion systems 24. This aircraft propulsion system 24 is configured as an open rotor propulsion system with a single open propulsor rotor and swirl recovery vane (SRV) architecture. Herein, the term "open" may describe a propulsion system section and/or a propulsion system component which is open to an environment 54 (e.g., an ambient environment) external to the aircraft propulsion system 24 and, more generally, the aircraft 20 (see FIG. 1).

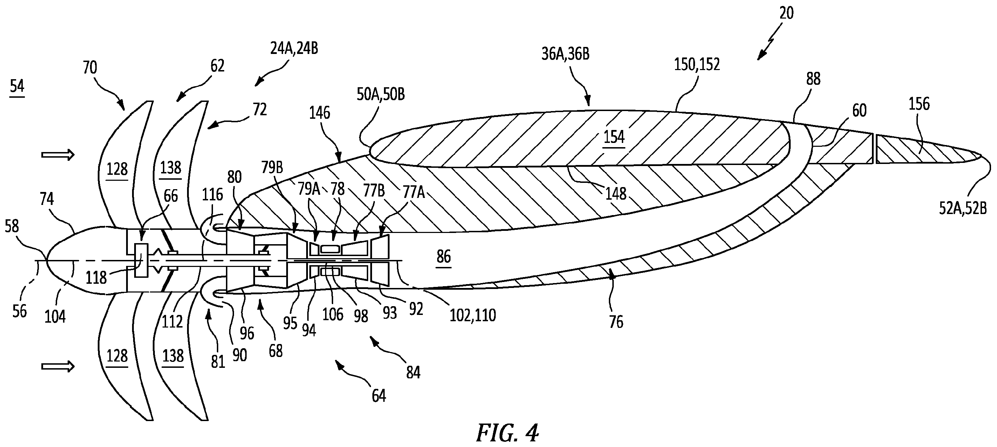

The aircraft propulsion system 24 of FIG. 2 extends axially along an axis 56 of the aircraft propulsion system 24 between an upstream, forward end 58 of the aircraft propulsion system 24 and a downstream, aft end 60 of the aircraft propulsion system 24 (see also FIG. 4). The propulsion system axis 56 may be a centerline axis of the aircraft propulsion system 24 and/or a centerline axis of one or more members of the aircraft propulsion system 24. The propulsion system axis 56 may also or alternatively be a rotational axis of one or more members of the aircraft propulsion system 24. The aircraft propulsion system 24 of FIG. 2 includes an open rotor propulsion section 62 (e.g., an open rotor propulsion module), a gas turbine engine 64, a drivetrain 66 and a stationary housing structure 68.

The propulsion section 62 includes an open propulsor rotor 70 and an open guide vane structure 72. These propulsion section members 70 and 72 are un-ducted components of the respective aircraft propulsion system 24 and its propulsion section 62. The propulsion section 62 of FIG. 2 also includes a nose cone 74 disposed at the propulsion system forward end 58. Briefly, this nose cone 74 may be configured as a spinner which is rotatable with the propulsor rotor 70 about the propulsion system axis 56. Alternatively, the nose cone 74 may be configured as a stationary structure of the propulsion section 62.

The turbine engine 64 is configured to power operation of the propulsion section 62. The turbine engine 64 of FIG. 2 includes an inlet section 76 (see also FIG. 4), a core compressor section 77, a core combustor section 78, a core turbine section 79, a power turbine (PT) section 80 and an exhaust section 81. The core compressor section 77 of FIG. 2 includes a low pressure compressor (LPC) section 77A and a high pressure compressor (HPC) section 77B. The core turbine section 79 of FIG. 2 includes a high pressure turbine (HPT) section 79A and an intermediate pressure turbine (IPT) section 79B, where the PT section 80 is a low pressure turbine (LPT) section of the turbine engine 64. At least (or only) the LPC section 77A, the HPC section 77B, the combustor section 78, the HPT section 79A and the IPT section 79B collectively form a core 84 (e.g., a gas generator) of the turbine engine 64. The aircraft propulsion system 24 of FIG. 2 and its turbine engine 64 also include an engine flowpath 86. This engine flowpath 86 extends through the turbine engine 64 and its engine core 84 from an airflow inlet 88 into the engine flowpath 86 to a combustion products exhaust 90 from the engine flowpath 86. More particularly, the engine flowpath 86 extends sequentially through the inlet section 76, the LPC section 77A, the HPC section 77B, the combustor section 78, the HPT section 79A, the IPT section 79B, the PT section 80 and the exhaust section 81 from the flowpath inlet 88 to the flowpath exhaust 90. The flowpath inlet 88 is also an airflow inlet into the aircraft propulsion system 24 of FIG. 2. The flowpath exhaust 90 is also a combustion products exhaust from the aircraft propulsion system 24 of FIG. 2.

The LPC section 77A includes a bladed low pressure compressor (LPC) rotor 92. The HPC section 77B includes a bladed high pressure compressor (HPC) rotor 93. The HPT section 79A includes a bladed high pressure turbine (HPT) rotor 94. The IPT section 79B includes a bladed intermediate pressure turbine (IPT) rotor 95. The PT section 80 includes a bladed power turbine (PT) rotor 96; e.g., a low pressure turbine (LPT) rotor. Each of these engine rotors 92-96 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 86. Each of the rotor blades is connected to the respective rotor base. Each of the rotor blades projects radially (e.g., spanwise) out from the respective rotor base into the engine flowpath 86 and to a distal tip of the respective rotor blade.

The HPC rotor 93 is coupled to and rotatable with the HPT rotor 94. The HPC rotor 93 of FIG. 2, for example, is connected to the HPT rotor 94 by a high speed shaft 98. At least (or only) the HPC rotor 93, the HPT rotor 94 and the high speed shaft 98 collectively form a high speed rotating structure 100; e.g., a high speed spool of the turbine engine 64 and its engine core 84. This high speed rotating structure 100 of FIG. 2 and its members 93, 94 and 98 are rotatable about the propulsion system axis 56. However, in other embodiments, the high speed rotating structure 100 and its members 93, 94 and 98 may alternatively be rotatable about another rotational axis (e.g., a high speed rotating structure axis 102 or, more generally, an engine axis) that is laterally and/or angularly offset from a propulsor axis 104 (e.g., a rotational, centerline axis) of the propulsor rotor 70.

The LPC rotor 92 is coupled to and rotatable with the IPT rotor 95. The LPC rotor 92 of FIG. 2, for example, is connected to the IPT rotor 95 by a low speed shaft 106. At least (or only) the LPC rotor 92, the IPT rotor 95 and the low speed shaft 106 collectively form a low speed rotating structure 108; e.g., a low speed spool of the turbine engine 64 and its engine core 84. This low speed rotating structure 108 of FIG. 2 and its members 92, 95 and 106 are rotatable about the propulsion system axis 56. However, in other embodiments, the low speed rotating structure 108 and its members 92, 95 and 106 may alternatively be rotatable about another rotational axis (e.g., a low speed rotating structure axis 110 or, more generally, the engine axis) that is laterally and/or angularly offset from the propulsor axis 104.

The PT rotor 96 (e.g., the LPT rotor) is connected to and rotatable with a power turbine shaft 112. At least (or only) the PT rotor 96 and the power turbine shaft 112 collectively form a power turbine rotating structure 114. This power turbine rotating structure 114 of FIG. 2 and its members 96 and 112 are rotatable about the propulsion system axis 56. However, in other embodiments, the power turbine rotating structure 114 and its members 96 and 112 may alternatively be rotatable about another rotational axis (e.g., a power turbine rotating structure axis 116) that is laterally and/or angularly offset from the propulsor axis 104.

The power turbine rotating structure 114 is coupled to the propulsor rotor 70 through the drivetrain 66. This drivetrain 66 may be configured as a geared drivetrain, where a geartrain 118 (e.g., a transmission, a speed change device, an epicyclic geartrain, etc.) is disposed between and operatively couples the propulsor rotor 70 to the power turbine rotating structure 114 and its PT rotor 96. With this arrangement, the propulsor rotor 70 may rotate at a different (e.g., slower) rotational speed than the power turbine rotating structure 114 and its PT rotor 96. Here, the propulsor rotor 70 and the power turbine rotating structure 114 may rotate in a common (the same) direction about the propulsion system axis 56 or in opposite directions about the propulsion system axis 56 depending, for example, upon the specific configuration of the geartrain 118. Alternatively, the drivetrain 66 may be configured as a direct-drive drivetrain, where the geartrain 118 is omitted. With such an arrangement, the propulsor rotor 70 rotates at a common (the same) rotational speed as the power turbine rotating structure 114 and its PT rotor 96.

The engine sections 76-81 may be housed within and/or formed by the housing structure 68. This housing structure 68 includes an engine case and a nacelle. The engine case houses one or more of the engine sections 77A-79B (and/or 80); e.g., the engine core 84 and/or the PT section 80. The engine case, for example, may extend axially along (e.g., axially overlaps) and extend circumferentially about (e.g., circumscribes) the engine sections 77A-80 and the engine rotors 92-96. The engine case may also house the geartrain 118. The nacelle houses and provides an aerodynamic cover over the engine case. An exterior wall of the nacelle, for example, may be disposed radially outboard of, extend axially along (e.g., axially overlaps) and extend circumferentially about (e.g., circumscribes) the engine core 84, the PT section 80 and the engine case. This nacelle wall may at least partially or completely form an exterior surface 120 of the housing structure 68 and borders the external environment 54. With the foregoing arrangement, the bladed rotors 92-96 are disposed within the housing structure 68. By contrast, the propulsor rotor 70 and the guide vane structure 72 are disposed at least partially (or completely) outside of the housing structure 68.

The LPC section 77A, the HPC section 77B, the combustor section 78, the HPT section 79A, the IPT section 79B, the PT section 80 and the propulsion section 62 may be arranged sequentially along the propulsion system axis 56 between the propulsion system aft end 60 and the propulsion system forward end 58. The inlet section 76 of FIG. 2 is disposed at or near the propulsion system aft end 60. The exhaust section 81 of FIG. 2 is disposed near the propulsion system forward end 58, for example axially between (a) the PT section 80 and/or the engine core 84 and (b) propulsion section 62 and its propulsor rotor 70. With this reverse flow arrangement, the HPT section 79A, the IPT section 79B, the PT section 80 and the exhaust section 81 may be arranged axially along the propulsion system axis 56 between (a) one or more of the engine sections 76-78 and (b) the propulsor rotor 70. The HPT section 79A, the IPT section 79B and optionally the PT section 80 may be arranged axially along the propulsion system axis 56 between (a) the combustor section 78 and (b) the propulsion section 62 and its propulsion section members 70 and 72. The PT section 80 may be arranged axially along the propulsion system axis 56 between (a) the engine core 84 and (b) the propulsor rotor 70 and, more generally, the entire propulsion section 62. The engine core 84 and the PT section 80 may each be arranged axially along the propulsion system axis 56 between (a) the inlet section 76 and/or the propulsion system aft end 60 and (b) the propulsor rotor 70 and, more generally, the entire propulsion section 62.

During operation of the aircraft propulsion system of FIG. 2, ambient air within the external environment 54 is propelled by the rotating propulsor rotor 70 in the downstream, aft direction towards the propulsion system aft end 60. A major portion (e.g., more than 50%) of this air bypasses the turbine engine 64 to provide forward thrust while a minor portion (e.g., less than 50%) of the air flows into the turbine engine 64. For example, an outer stream of the air propelled by the rotating propulsor rotor 70 flows axially across the guide vane structure 72 and outside of the housing structure 68 and its exterior surface 120; e.g., along an exterior of the nacelle. The guide vane structure 72 conditions (e.g., straightens out, de-swirls, etc.) the outer stream of air within the external environment 54 to enhance the forward thrust. By contrast, an inner stream of the air propelled by the rotating propulsor rotor 70 may also flow across the guide vane structure 72 and then enter the turbine engine 64 and its engine flowpath 86 through the flowpath inlet 88. The air entering the engine flowpath 86 through the flowpath inlet 88 may be referred to as "core air".

The core air is compressed by the LPC rotor 92 and the HPC rotor 93 and directed into a combustion chamber 122 (e.g., an annular combustion chamber) of a combustor 124 (e.g., an annular combustor) in the combustor section 78. Fuel is injected into the combustion chamber 122 by one or more fuel injectors and mixed with the compressed core air to provide a fuel-air mixture. This fuel-air mixture is ignited and combustion products thereof flow through and sequentially drive rotation of the HPT rotor 94, the IPT rotor 95 and the PT rotor 96. The rotation of the HPT rotor 94 and the IPT rotor 95 respectively drive rotation of the HPC rotor 93 and the LPC rotor 92 and, thus, compression of the core air. The rotation of the PT rotor 96 drives the rotation of the propulsor rotor 70 through the drivetrain 66 and its geartrain 118. The turbine engine 64 and its members 84 and 114 thereby power operation of (e.g., drive rotation of) the propulsor rotor 70 during aircraft propulsion system operation.

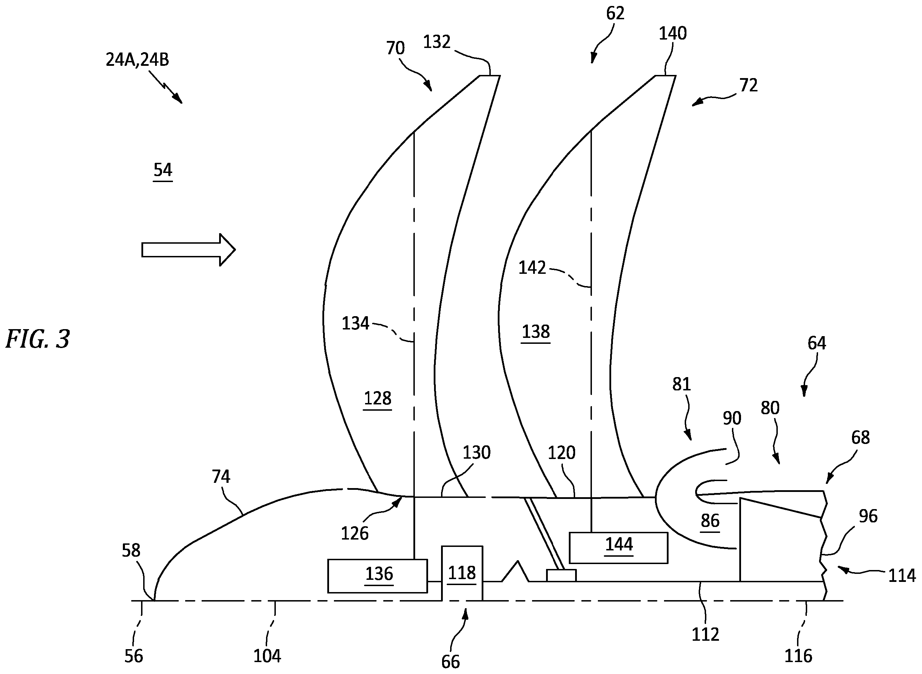

Referring to FIG. 3, the propulsor rotor 70 includes a rotor base 126 (e.g., a disk or a hub) and a plurality of open propulsor blades 128 (e.g., airfoils). The propulsor blades 128 are arranged and may be equispaced circumferentially about the rotor base 126 and the propulsion system axis 56 in an array; e.g., a circular array. This array of the propulsor blades 128 may be unshrouded or alternatively shrouded by a tubular propulsor rotor shroud dedicated to the propulsor rotor 70 for example. The propulsor blade array and, more generally, the propulsor rotor 70 may include a total number of nine (9) or more (e.g., twelve (12) or more) of the propulsor blades 128. Each of the propulsor blades 128 is connected to (e.g., formed integral with or otherwise attached to) the rotor base 126. Each of the propulsor blades 128 projects spanwise along a span line of the respective propulsor blade 128 (e.g., radially relative to the propulsion system axis 56) out from an exterior surface 130 of the rotor base 126, into the external environment 54, to a distal tip 132 of the respective propulsor blade 128. Here, the exterior surface 130 radially borders the external environment 54 and forms a platform surface of the propulsor rotor 70. Each propulsor blade 128 is thereby configured as an un-ducted propulsor blade which is exposed to (e.g., disposed in) the surrounding external environment 54.

Each propulsor blade 128 may be configured to pivot about a blade pivot axis 134 of the respective propulsor blade 128. This blade pivot axis 134 extends radially relative to the propulsion system axis 56. Each propulsor blade 128 of FIG. 3 is operatively coupled with a blade actuation system 136. This blade actuation system 136 is configured to pivot each propulsor blade 128 about its blade pivot axis 134. By pivoting each propulsor blade 128 about its blade pivot axis 134, a pitch of the respective propulsor blade 128 may be changed. However, it is contemplated some or all of the propulsor blades 128 may be alternatively moved to change the propulsor blade pitch and/or another propulsor blade parameter such as blade camber. Moreover, it is contemplated some or all of the propulsor blades 128 may alternatively be fixed position propulsor blades in other embodiments.

The guide vane structure 72 of FIG. 3 includes a plurality of open exit guide vanes 138 (e.g., airfoils). These guide vanes 138 are arranged and may be equispaced circumferentially about the propulsion system axis 56 in an array; e.g., a circular array. The array of the guide vanes 138 may be unshrouded or alternatively shrouded by a tubular guide vane shroud dedicated to the guide vane structure 72 for example. The guide vane structure 72 and its guide vanes 138 are arranged axially next to the propulsor rotor 70 and its propulsor blades 128. The guide vane structure 72 and its guide vanes 138 of FIG. 3, for example, are arranged downstream of the propulsor rotor 70 and its propulsor blades 128, without (e.g., any) other elements axially therebetween to obstruct, turn and/or otherwise influence the air propelled by the propulsor rotor 70 to the guide vane structure 72 for example. Each of the guide vanes 138 of FIG. 3 is coupled to the housing structure 68. Each of the guide vanes 138 projects spanwise along a span line of the respective guide vane 138 (e.g., radially relative to the propulsion system axis 56) out from the exterior surface 120, into the external environment 54, to a distal tip 140 of the respective guide vane 138. Each guide vane 138 is thereby configured as an un-ducted guide vane which is exposed to (e.g., disposed in) the surrounding external environment 54.

Each guide vane 138 may be configured to pivot about a vane pivot axis 142 of the respective guide vane 138. This vane pivot axis 142 extends radially relative to the propulsion system axis 56. Each guide vane 138 of FIG. 3 is operatively coupled with a vane actuation system 144. This vane actuation system 144 may be discrete from or integrated as part of the blade actuation system 136. The vane actuation system 144 is configured to pivot each guide vane 138 about its respective vane pivot axis 142. By pivoting each guide vane 138 about its vane pivot axis 142, a pitch of the respective guide vane 138 may be changed. However, it is contemplated some or all of the guide vanes 138 may be alternatively moved to change the guide vane pitch and/or another guide vane parameter such as vane camber. Moreover, it is contemplated some or all of the guide vanes 138 may alternatively be fixed position guide vanes in other embodiments.

Referring to FIG. 4, each aircraft propulsion system 24 may be mounted to the respective aircraft wing 36 in an underwing mount configuration. The aircraft propulsion system 24 of FIG. 4, for example, is mounted to the respective aircraft wing 36 by a pylon structure 146. This pylon structure 146 projects out from a vertical bottom side 148 of the respective aircraft wing 36 (e.g., in a longitudinally forward and vertically downward direction) to the housing structure 68. The pylon structure 146 may thereby structurally tie the housing structure 68 and the various propulsion system members housed within and/or attached to the housing structure 68 to the respective aircraft wing 36 and, more generally, the aircraft airframe 22. With the underwing mount configuration of FIG. 4, the propulsion section 62 and its members 70 and 72 are spaced longitudinally forward and upstream of the respective aircraft wing 36 and its leading edge 50. The housing structure 68 and the various propulsion system members (e.g., 64, 80 and 84) housed within and/or supported by the housing structure 68 are located vertically below the respective aircraft wing 36 when viewed, for example, from the vertical reference plane. The propulsion system axis 56 and, thus, the rotational axes 102, 104, 110 and 116 of the various rotating members 70 and 92-96 of FIG. 4 are also located vertically below the respective aircraft wing 36 when viewed, for example, from the vertical reference plane. In addition, a vertical top (e.g., a top-dead-center (TDC)) of the propulsion section 62 and each of its members 70 and 72 may be located vertically closer to the respective aircraft wing 36 than a vertical bottom (e.g., a bottom-dead-center (BDC)) of the propulsion section 62 and each of its members 70 and 72.

The engine flowpath 86 of FIG. 4 extends away from the engine core 84 and vertically through the respective aircraft wing 36 to its flowpath inlet 88. Here, the flowpath inlet 88 is arranged along an exterior surface 150 of the respective aircraft wing 36 at a vertical top side 152 of the respective aircraft wing 36, which vertical top side 152 is vertically opposite the vertical bottom side 148. The flowpath inlet 88 is thereby disposed vertically above the propulsion system axis 56 and may (or may not) also be disposed vertically above the vertical top of the propulsion section 62 and each of its members 70 and 72. The aircraft wing 36 of FIG. 4 is disposed vertically between (a) one or more propulsion system elements such as the propulsion system axis 56, the turbine engine 64 and its engine core 84, the housing structure 68, etc. and (b) the flowpath inlet 88. The aircraft wing 36 of FIG. 4 is also disposed vertically between the ground and the flowpath inlet 88. With this configuration, the aircraft wing 36 of FIG. 4 may substantially shield the flowpath inlet 88 from ground debris (e.g., dirt, sand, etc.) blown around by the propulsor rotor 70 during aircraft operation on or near the ground; e.g., taxiing, takeoff, landing, etc. The flowpath inlet 88 may also be less susceptible to bird strikes and/or other foreign matter ingestion.

The flowpath inlet 88 may be configured to direct boundary layer air flowing along the respective aircraft wing 36 and its exterior surface 150 into the engine flowpath 86. This boundary layer air may be directed into the engine flowpath 86 (e.g., slightly) before, (e.g., slightly) after or at a chordwise location (or region) along the respective aircraft wing 36 and its exterior surface 150 where the boundary layer air becomes turbulent. The flowpath inlet 88 may thereby be configured to facilitate active laminar flow control over the respective aircraft wing 36. Provision of such active laminar flow control may in turn reduce aircraft drag, improve aircraft efficiency and/or reduce aircraft propulsion system power requirements. In the arrangement of FIG. 4, the flowpath inlet 88 is located chordwise closer to the wing trailing edge 52 than the wing leading edge 50. The flowpath inlet 88 is also located along a wing body 154 of the respective aircraft wing 36, longitudinally forward and upstream of a control surface 156 movably (e.g., pivotally and/or translatable) mounted to the wing body 154. The present disclosure, however, is not limited to such an exemplary arrangement.

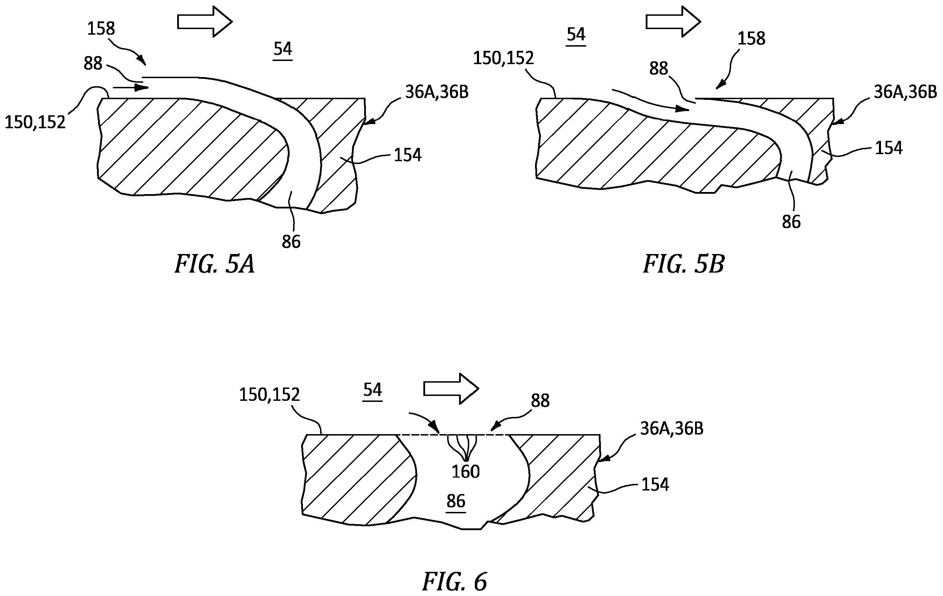

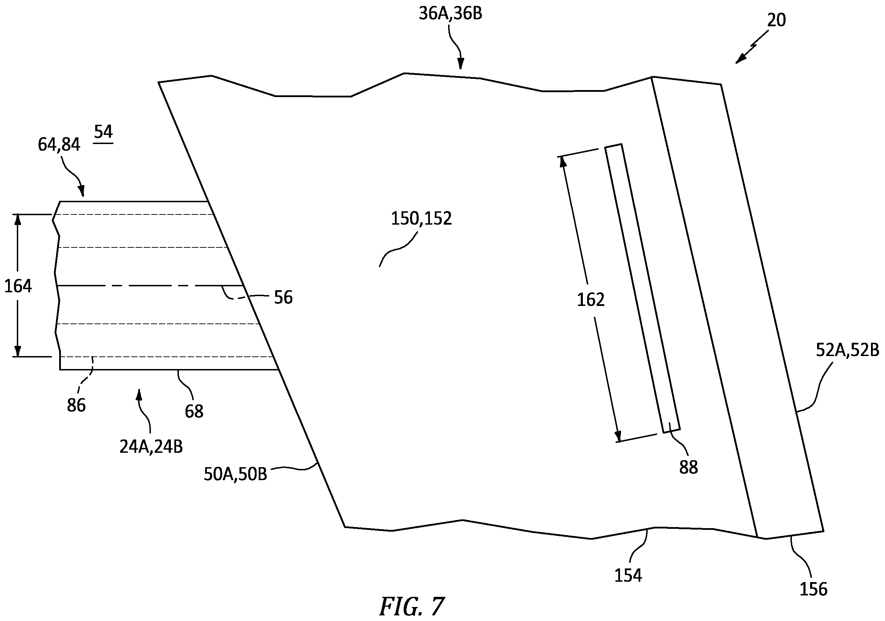

Referring to FIGS. 5A and 5B, the flowpath inlet 88 may be formed by an air scoop 158 configured with the respective aircraft wing 36. Referring to FIG. 5A, the air scoop 158 may be configured as a raised scoop which projects vertically out from the respective aircraft wing 36 and its exterior surface 150 into the external environment 54. Referring to FIG. 5B, the air scoop 158 may alternatively be configured as a recessed scoop which is recessed vertically into the respective aircraft wing 36 from its exterior surface 150. The present disclosure, however, is not limited to such exemplary flowpath inlet arrangements. For example, referring to FIG. 6, an exterior skin of the respective aircraft wing 36 forms the exterior surface 150 with a plurality of perforations 160; e.g., through-holes. These perforations 160 piercing (e.g., extending vertically through) the exterior skin may collectively form the flowpath inlet 88 flush with the exterior surface 150 of the respective aircraft wing 36. Referring to FIG. 7, the flowpath inlet 88 may have a width 162 measured spanwise along the respective aircraft wing 36 which is greater than a width 164 (e.g., an outer diameter) of the engine flowpath 86 within the turbine engine 64 and its engine core 84 (schematically shown). The inlet width 162, for example, may be equal to or greater than one and one-half times (1.5x) to two times (2x) a maximum value of the flowpath width 164. The present disclosure, however, is not limited to such an exemplary dimensional relationship.

Referring to FIG. 4, a reverse flow arrangement as described above may facilitate arranging the aircraft propulsion system 24 and its turbine engine 64 further aft relative to the respective aircraft wing 36. The aircraft wing 36 of FIG. 4, for example, may (e.g., partially) chordwise and spanwise overlap various members of the aircraft propulsion system 24 such as the turbine engine 64 and its engine core 84 and the housing structure 68. More particularly, the aircraft wing 36 of FIG. 4 may partially or completely chordwise and spanwise overlap the LPC section 77A, and potentially one or more stages of the HPC section 77B. It is worth noting, the LPC section 77A and its LPC rotor 92 may have a (e.g., significantly) lower risk for uncontained engine rotor failure (UERF) than the turbine rotors 94-96 or later stages of the HPC rotor 93. By contrast, an aircraft propulsion system with a typical forward flow arrangement may be shifted further forward away from an aircraft wing such that the aircraft wing does not overlap any of its turbine rotor stages. By arranging the aircraft propulsion system 24 of FIG. 4 and its turbine engine 64 further aft relative to the respective aircraft wing 36 as described above, a cantilevered weight of the aircraft propulsion system 24 may be reduced, which may reduce an overall size and structural requirements for both the pylon structure 146 and a portion of the aircraft wing 36 to which the pylon structure 146 is mounted. Of course, it is contemplated the housing structure 68 may (or may not) include additional reinforcement between the LPC section 77A and the respective aircraft wing 36 as failsafe protection. The configuration of FIG. 4 may require less additional reinforcement to guard against a UERF event, thereby potentially rendering the aircraft propulsion system 24 and/or the aircraft airframe 22 a lighter weight than associated with a typical forward flow arrangement.

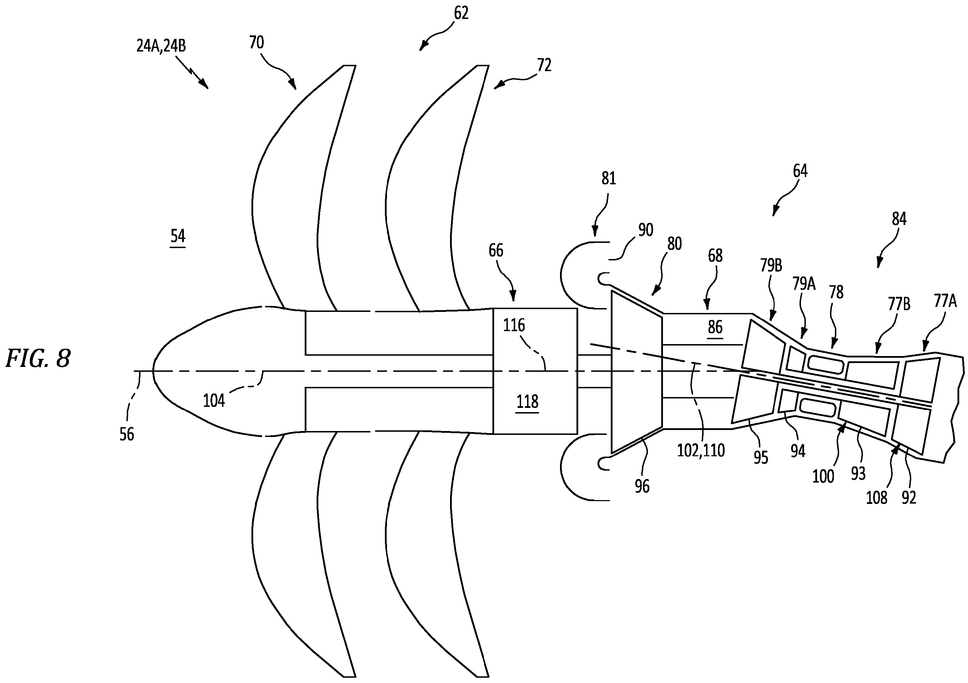

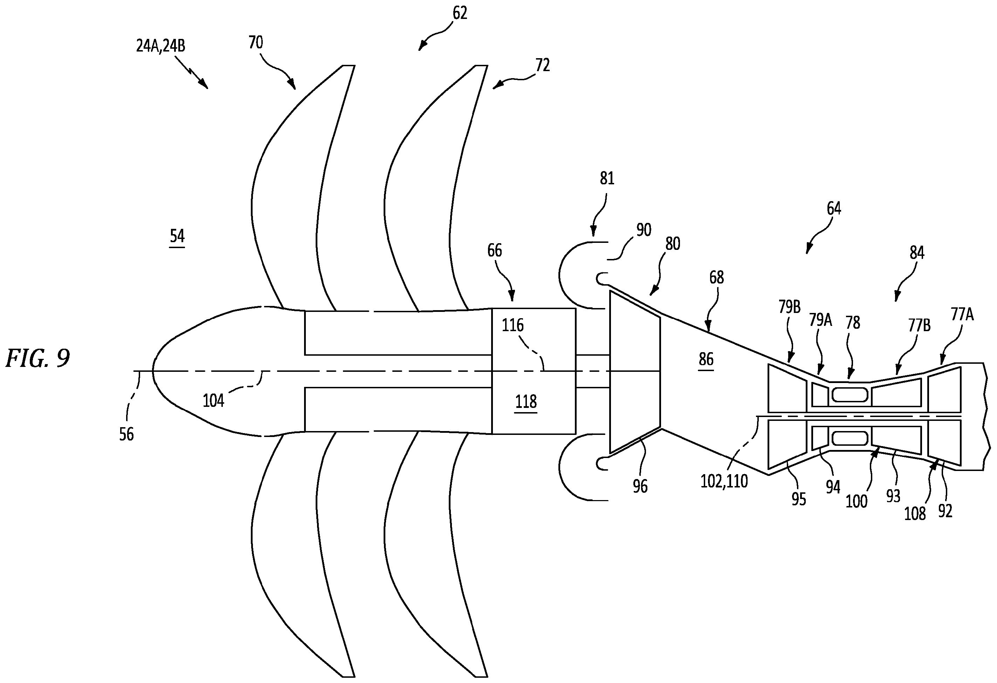

In some embodiments, referring to FIG. 2, the rotating element axes 102, 104, 110 and 116 of each aircraft propulsion system 24 may be parallel and coincident with one another when viewed from the vertical reference plane. The rotating elements 70, 100, 108 and 114 within the aircraft propulsion system 24 of FIG. 2, for example, are coaxial with one another. In other embodiments, referring to FIGS. 8 and 9, one or more of the rotating structure axes 102 and/or 110 may be angularly and/or vertically offset from the propulsor axis 104 when viewed from the vertical reference plane. For example, referring to FIG. 8, the rotating structure axes 102 and 110 may be angularly offset from the propulsor axis 104 by a non-zero acute angle. In another example, referring to FIG. 9, the rotating structure axes 102 and 110 may be vertically offset downward (e.g., spaced vertically downwards) from the propulsor axis 104. Offsetting the engine rotating structures 100 and 108 and, more generally, the engine core 84 from the propulsion section 62 and its members 70 and 72 may facilitate packaging the respective aircraft propulsion system 24 closer to the respective aircraft wing 36 (see FIGS. 1 and 4) and/or raising the propulsion section 62 and its members 70 and 72 further vertically up and away from the ground. Such a raised configuration of the propulsion section 62 may result in additional lift generation of the air propelled by the open propulsor rotor 70 and straightened by the guide vane structure 72, as it flows over the aircraft wing 30.

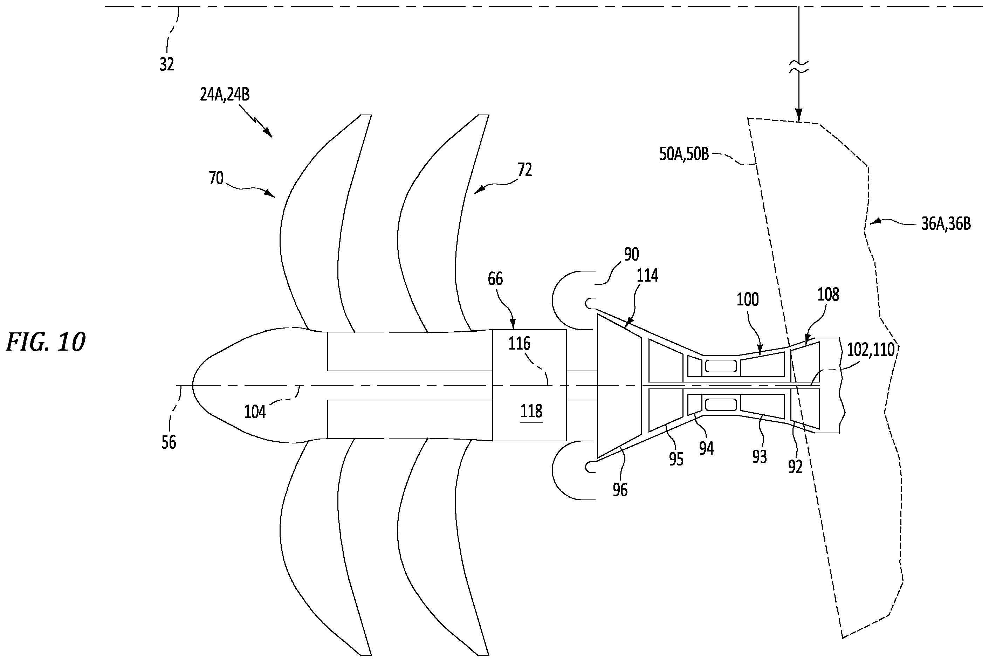

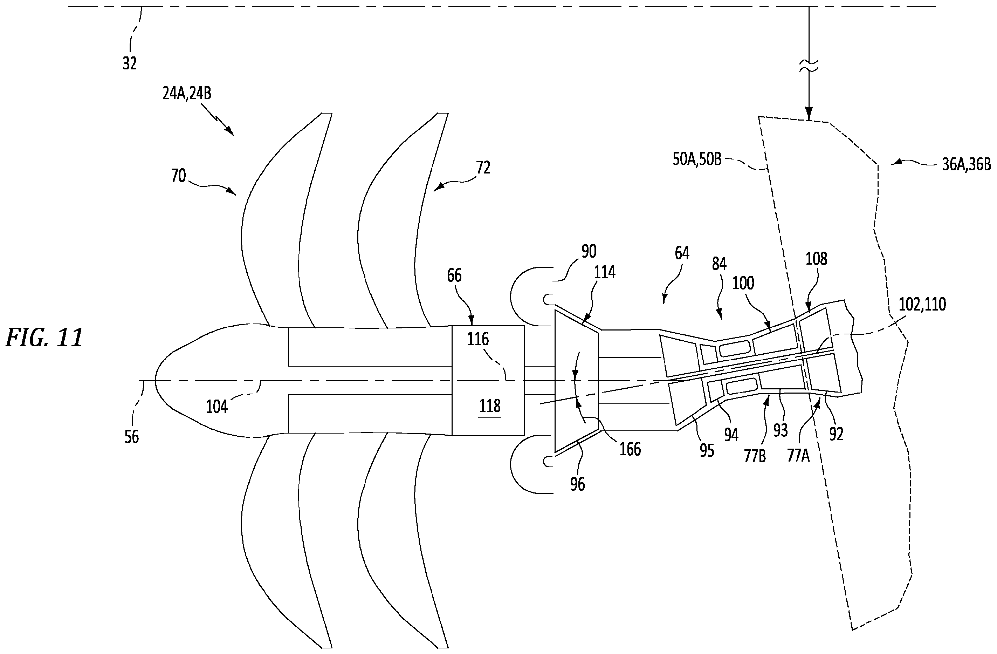

In some embodiments, referring to FIG. 10, the rotating element axes 102, 104, 110 and 116 of each aircraft propulsion system 24 may be parallel with one another when viewed from the horizontal reference plane. This arrangement of FIG. 10 may be paired with any of the arrangements shown in FIGS. 2, 4, 8 and 9. In other embodiments, referring to FIG. 11, the rotating structure axes 102 and 110 may be angularly offset from the propulsor axis 104 by a non-zero acute angle 166 when viewed from the horizontal reference plane. This angle 166 may be selected such that the rotating structure axes 102 and 110 are perpendicular to the respective wing leading edge 50, or at least within five degrees (±5°) or two degrees (±2°) of perpendicular to the respective wing leading edge 50. The angle 166 may also or alternatively be selected such that propulsor axis 104 is parallel to the aircraft centerline 32 and/or at least five degrees (5°) or ten degrees (10°) angularly offset from the respective wing leading edge 50. The angle 166, for example, may be greater than or equal to five degrees (5°) or ten degrees (10°) and/or less than or equal to sixty degrees (60°) or forty-five degrees (45°). This arrangement of FIG. 11 may be paired with any of the arrangements shown in FIGS. 2, 4, 8 and 9.

By arranging the rotating structure axes 102 and 110 perpendicular to, or close to perpendicular to, the respective wing leading edge 50 as described above, chordwise and/or spanwise overlap of the respective aircraft wing 36 over select engine sections of the turbine engine 64 may be minimized. For example, the respective wing leading edge 50 may be disposed next to, but may not cross, an upstream end plane (e.g., an aft end plane) of the HPC section 77B and its HPC rotor 93 when viewed, for example, from the horizontal reference plane. The turbine engine 64 and its engine core 84 may thereby be shifted even further aft relative to the respective aircraft wing 36 without, for example, increasing risk of uncontained engine rotor failure (UERF) damage to the respective aircraft wing.

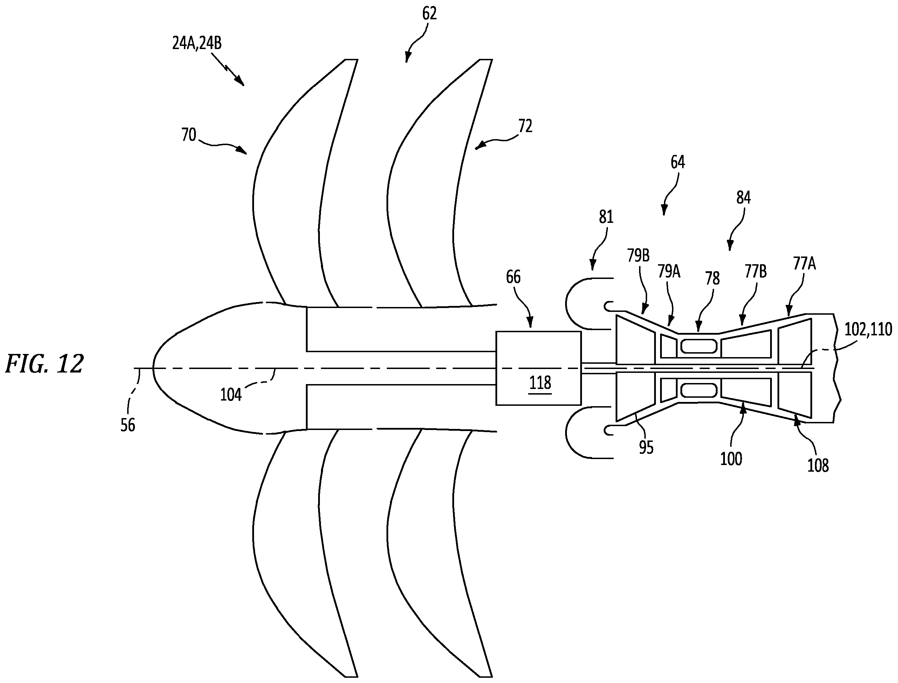

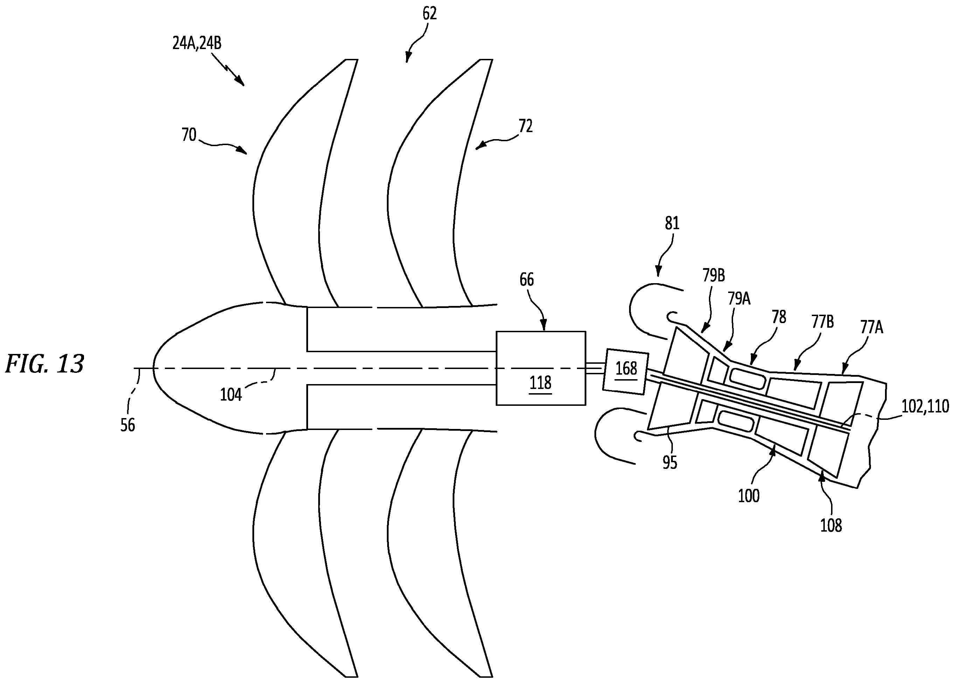

In some embodiments, referring to FIG. 2, the propulsor rotor 70 may be operatively coupled to and rotationally driven by the PT rotor 96. In other embodiments, referring to FIGS. 12 and 13, the propulsor rotor 70 may be operatively coupled to and rotationally driven by the low speed rotating structure 108. The drivetrain 66 and its geartrain 118, for example, may operatively couple the low speed rotating structure 108 and its turbine rotor 95 to the propulsor rotor 70. Here, the PT section 80 and its PT rotor 96 (see FIG. 2) are omitted from the turbine engine 64, and the turbine rotor 95 is configured as a low pressure turbine (LPT) rotor. Such embodiments may facilitate a reduced overall length of the respective aircraft propulsion system 24. In the embodiment of FIG. 12, the rotating structure axis 110 of the low speed rotating structure 108 may be coaxial with the propulsor axis 104 of the propulsor rotor 70. In the embodiment of FIG. 13, the rotating structure axis 110 of the low speed rotating structure 108 may be angularly or otherwise offset from the propulsor axis 104 of the propulsor rotor 70. The drivetrain 66 of FIG. 13, for example, includes an angle gearbox 168 operatively coupled between the low speed rotating structure 108 and the propulsor rotor 70. This angle gearbox 168 may be disposed between the low speed rotating structure 108 and the geartrain 118. Alternatively, the angle gearbox 168 may be disposed between the propulsor rotor 70 and the geartrain 118. Still alternatively, the angle gearbox 168 may be incorporated as part of or replace the geartrain 118. Such an arrangement may be provided to facilitate the offset in the horizontal reference plane and/or the vertical reference plane.

The guide vane structure 72 is described above as a fixed (e.g., non-rotatable) guide vane structure. It is contemplated, however, the guide vane structure 72 may alternatively be selectively rotatable about the propulsion system axis 56. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 70 and the structure 72 are counter-rotating about the propulsion system axis 56); and (B) a single open rotor and swirl recovery vane (SRV) propulsion system during a single rotor mode of operation (e.g., when the propulsor rotor 70 is rotating and the structure 72 is rotationally fixed about the propulsion system axis 56). Note, when the guide vane structure 72 is configured to selectively rotate about the propulsion system axis 56, the moving guide vanes 138 operate as propulsor blades.

Each aircraft propulsion system 24 and its propulsion section 62 are described as including the guide vane structure with an SRV or SRB configuration. The present disclosure, however, is not limited to such an exemplary propulsion system configuration. For example, each aircraft propulsion system 24 may alternatively be configured without an open guide vane structure. Each aircraft propulsion system 24, for example, may be configured as a single rotor (SR) open rotor propulsion system. In another example, each aircraft propulsion system 24 may alternatively be configured with a set of the open propulsor rotors (e.g., counter-rotating propulsor rotors) operatively coupled to the turbine engine 64 (see FIG. 2) through the geartrain 118. Each aircraft propulsion system 24, for example, may be configured as a counter-rotating open rotor (CROR) propulsion system.

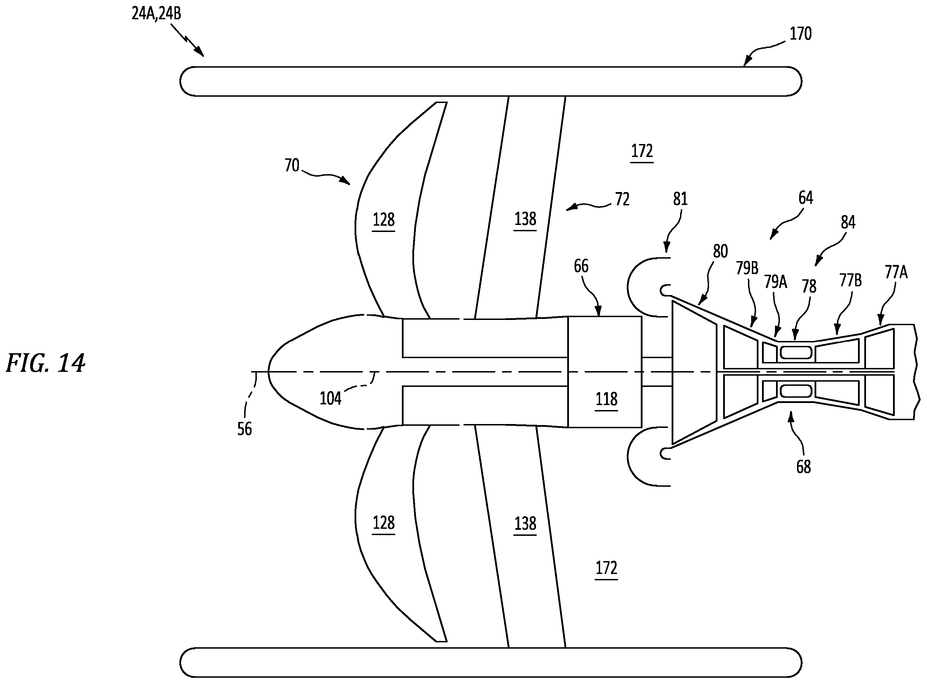

While each aircraft propulsion system 24 is generally described above as an open rotor propulsion system, the present disclosure is not limited to such exemplary propulsion systems. For example, referring to FIG. 14, each aircraft propulsion system 24 may alternatively be configured as a ducted rotor propulsion system such as a turbofan propulsion system. The aircraft propulsion system 24 of FIG. 14, for example, includes an outer housing structure 170 housing the propulsor rotor 70 and the guide vane structure 72. This outer housing structure 170 is disposed radially outboard of and is next to the propulsor rotor 70, and each guide vane 138 in the guide vane structure 72 extends radially to and is connected to the outer housing structure 170. The outer housing structure 170 also extends axially along (e.g., axially overlaps) and extends circumferentially about (e.g., circumscribes) the propulsor rotor 70 and the guide vane structure 72. With this arrangement, a bypass flowpath 172 (e.g., an annular bypass flowpath) is formed radially between and by the outer housing structure 170 and the housing structure 68; e.g., an inner housing structure.

Referring to FIGS. 1 and 4-7, while each flowpath inlet 88 is described above as being configured with a respective one of the aircraft wings 36, the present disclosure is not limited to such exemplary arrangements. It is contemplated, for example, each flowpath inlet 88 may alternatively be configured with another component of the aircraft airframe 22.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
an aircraft propulsion system including a propulsion section, an engine core and an engine flowpath, the propulsion section comprising a propulsor rotor rotatable about a propulsor axis, the engine core configured to power operation of the propulsion section and disposed aft of the propulsor rotor, the engine core including a core compressor section, a core combustor section and a core turbine section, and the engine flowpath extending through the core compressor section, the core combustor section and the core turbine section from an airflow inlet into the engine flowpath to a combustion products exhaust from the engine flowpath; and
an aircraft wing disposed aft of the propulsor rotor, the aircraft wing disposed vertically above the propulsor axis, and the aircraft wing chordwise and spanwise overlapping the engine core.

2. The assembly of claim 1, wherein the engine core is underwing mounted to the aircraft wing.

3. The assembly of claim 1 or 2, wherein the aircraft wing chordwise and spanwise overlaps the core compressor section.

4. The assembly of claim 1, 2 or 3, wherein the core turbine section is arranged between the propulsor rotor and the core combustor section.

5. The assembly of any preceding claim, wherein the aircraft propulsion system further includes a rotating structure, the rotating structure includes a core compressor rotor in the core compressor section and a core turbine rotor in the core turbine section, and the rotating structure is coaxial with the propulsor rotor.

6. The assembly of any of claims 1 to 4, wherein the aircraft propulsion system further includes a rotating structure rotatable about an engine axis, the rotating structure includes a core compressor rotor in the core compressor section and a core turbine rotor in the core turbine section, and the engine axis is offset from the propulsor axis.

7. The assembly of claim 6, wherein the engine axis is vertically offset from the propulsor axis.

8. The assembly of claim 6 or 7, wherein the engine axis is angularly offset from the propulsor axis.

9. The assembly of any preceding claim, wherein the aircraft propulsion system further includes a power turbine section arranged along the engine flowpath between the engine core and the combustion products exhaust, and the power turbine section comprises a power turbine rotor operatively coupled to the propulsor rotor.

10. The assembly of any preceding claim, wherein the aircraft propulsion system further includes a rotating structure rotatable about an engine axis, the rotating structure includes a core compressor rotor in the core compressor section and a core turbine rotor in the core turbine section, and the rotating structure is operatively coupled to the propulsor rotor.

11. The assembly of any preceding claim, wherein:
the airflow inlet is disposed vertically at or above a vertical top of the propulsion section; and/or
the airflow inlet is disposed vertically above the propulsor axis.

12. The assembly of any preceding claim, wherein the airflow inlet is configured with the aircraft wing.

13. The assembly of any preceding claim, wherein:
the propulsor rotor comprises an open propulsor rotor, and, optionally, the aircraft propulsion system further includes an open guide vane structure configured to condition air propelled by the open propulsor rotor; or
the propulsor rotor comprises a ducted propulsor rotor.

14. An assembly for an aircraft, comprising:
an aircraft propulsion system including a propulsion section, an engine core and an engine flowpath, the propulsion section comprising an open propulsor rotor, the engine core configured to power operation of the propulsion section and disposed aft of the open propulsor rotor, the engine core including a core compressor section, a core combustor section and a core turbine section, and the engine flowpath extending through the core compressor section, the core combustor section and the core turbine section from an airflow inlet into the engine flowpath to a combustion products exhaust from the engine flowpath; and
an aircraft wing disposed aft of the open propulsor rotor, and the aircraft wing chordwise and spanwise overlapping the core compressor section,
wherein, optionally:
the aircraft wing is arranged vertically closer to a vertical top of the propulsion section than a vertical bottom of the propulsion section; and/or
the propulsion section further comprises an open guide vane structure next to and downstream of the open propulsor rotor.

15. An assembly for an aircraft, comprising:
an aircraft propulsion system including a propulsion section, an engine core, a rotating structure and an engine flowpath, the propulsion section comprising a propulsor rotor rotatable about a propulsor axis, the engine core configured to power operation of the propulsion section and disposed aft of the propulsor rotor, the engine core including a core compressor section, a core combustor section and a core turbine section, the rotating structure including a core compressor rotor in the core compressor section and a core turbine rotor in the core turbine section, the rotating structure rotatable about an engine axis that is parallel to the propulsor axis in a vertical reference plane, and the engine flowpath extending through the core compressor section, the core combustor section and the core turbine section from an airflow inlet into the engine flowpath to a combustion products exhaust from the engine flowpath; and
an aircraft wing disposed aft of the propulsor rotor, and the aircraft wing chordwise and spanwise overlapping the core compressor section.
